# EUROPEAN PATENT SPECIFICATION

(11) **EP 4 399 126 B1**
(45) Date of publication and mention of the grant of the patent: **02.07.2025**
(21) Application number: 21786432.1
(22) Date of filing: 30.09.2021
(51) Int. Cl.: B60R 5/04

(54) **DEVICE FOR LOCKING A ROLLER BLIND CASSETTE ON A TRUNK OF A VEHICLE**
VORRICHTUNG ZUM VERRIEGELN EINER ROLLLADENKASSETTE AUF EINEM KOFFERRAUM EINES FAHRZEUGS
DISPOSITIF DE VERROUILLAGE D'UNE CASSETTE DE STORE À ROULEAU SUR LE COFFRE D'UN VÉHICULE

(43) Date of publication of application: 17.07.2024
(73) Proprietor: Wuhan Lotus Cars Co., Ltd., Wuhan, Hubei (CN)
(72) Inventor: CORTI, Enrico, 65479 Raunheim (DE)
(74) Representative: Studio Torta S.p.A.
(86) International application number: PCT/EP2021/077000
(87) International publication number: WO 2023/051920

(56) References cited:
- DE-A1- 10 256 347
- DE-A1- 102015 110 892
- DE-B3- 102008 062 895

## Description

The invention relates to a device for locking a roller blind cassette on a trunk of a vehicle.

The trunk of vehicles may be a space in the cabin of the vehicle. It is common to use a blind to separate the space of the trunk from the rest of the cabin. The blind hides the content of the trunk and may avoid that luggage moves in the cabin, in particular in case of an accident. Blinds may be rollers which may be rolled in and stored in a cassette when not in use.

From DE 10 2115 110 892 A1, it is known to provide vehicle with a receiving geometry for a roller blind cassette. A sled being movable along a horizontal rail is configured to be attached to the roller blind for pulling the roller blind out of the cassette. The sled has a locking portion and an attachment portion that may be attached to the roller blind. For locking the cassette, the sled is moved along the rail towards the cassette until the locking portion engages the cassette to lock the cassette to the trunk. Then the locking portion is detached from the sled. For pulling out the roller blind, the sled only moves the attachment portion away from the cassette.

The technical object of the invention may be to provide an improved device for locking a roller blind cassette on a trunk of a vehicle that is cost effective, easy to handle and that has an improved user convenience.

Claims 1 and 12 indicate the main features of the invention. Features of embodiments of the invention are subject of claims 2 to 11 and 13 to 14.

In an aspect of the invention, a device for locking a roller blind cassette on a trunk of a vehicle is provided, the device comprising: a rail extending at least partially along the trunk, a sled being attached to the rail in a sliding manner and being configured to guide a roller blind section from the roller blind cassette along the rail, a locking element for locking the roller blind cassette on the trunk, the locking element being movable between a locking position and an unlocking position, an actuation element for actuating the locking element, wherein the actuation element comprises a contact section being arranged in a portion of the rail, wherein the actuation element is movable by the sled between a first position and a second position, when the sled moves along the portion of the rail and contacts the contact section, wherein the actuation element is configured to move the locking element from the locking position to the unlocking position, when moving from the first position to the second position.

According to the invention the device for locking the roller blind cassette on a trunk of a vehicle comprises an actuation element that is configured to move the locking element in a rotating manner when the sled contacts the contact section of the actuation element and moves the actuation element from the first position to the second position. The sled is driven along a rail that has a portion extending along the trunk. The sled may be arranged on the rail in a sliding manner. Thus the sled may move along the rail. Furthermore, the sled may be connected to the rail such that the sled cannot move in another direction but along the rail. A roller blind bar may for example be connected to the sled. The roller blind bar may e.g. receive an end portion of the roller blind to attach roller blind to the sled. The actuation element comprises a contact section that is arranged on the portion of the rail. The contact section arranged such that the sled when moving along the portion of the rail will contact the contact section, i.e. the contact section is arranged in the moving path of the sled. By contacting the contact section, the sled can move the actuation element. Without any contact between the sled and the actuation element, the actuation element may be in the first position. When the actuation element is in the first position, the locking element is in the locking position. In the locking position, the locking element locks the roller blind cassette to the trunk. When contacting the contact section, the sled shifts the actuation element from the first position to the second position. While moving the actuation element from the first position to the second position, the locking element is moved from the locking position to the unlocking positon. In the unlocking position, the roller blind cassette may be coupled to or released from the trunk. Thus, by moving the sled along the portion of the rail, the roller blind cassette can be unlocked in an easy manner. Furthermore, the device is simple to mount and does not comprise complex part. Thus, the device is cost effective. Furthermore, the device is very convenient for a user since the user does not have to unlock the roller blind cassette manually.

In an example, the locking element may be movable in a rotating manner.

The locking element may therefore perform a pivot movement when moving between the locking position and the unlocking position.

In an example the locking element may comprise a screw drive, wherein the actuation element comprises a threaded opening which is engaged to the screw drive such that a movement of the actuation element between the first position and the second position turns the screw drive that rotates the locking element between the locking position and the unlocking position.

Providing a screw drive is a simple but effective way to transform a linear movement of the actuation element into a pivot movement of the locking element. The screw drive may comprises a threaded shaft. The thread of the shaft may engage with the thread of the opening of the actuation element.

In another example, at least a portion of the screw drive may extend parallel to the rail.

The parallel extension of the screw drive to the rail reduces any bending forces on the screw drive during the shift of the actuation element.

Furthermore, the locking element may for example comprise a locking hook element for engaging and locking a roller blind cassette, when the locking element is in the locking position.

The actuation element may for example further be movable by the sled into a third position being different from the first and second position, wherein the actuation element is configured to move the locking element into a presenting position, when moving into the third position.

The actuation element may reach the third position when the sled shifts the actuation element from the first position past the second position. The actuation element may then move the locking element from the unlocking position to the presenting position. In the presenting position, the locking element may present the roller blind cassette to a user. The presentation of the roller blind cassette may mean that the cassette is lifted up, for example. Thus, the device may combine the locking and presenting function for the roller blind cassette.

In another example, the locking element may comprise a presenting hook element for pushing up a roller blind cassette, when the locking element is moved into the presenting position.

The locking element may be a lever with two arms. One arm may comprise the presenting hook element. The presenting hook element may engage and lift up the roller blind cassette when the actuation element is shifted from the second position to the third position, i.e. when the locking element is moved from the unlocking position to the presentation position.

In a further example, the device may further comprise a retracting element being configured to drive the locking element into the locking position unless the actuation element moves the locking element.

The retracting element may force the locking element into the locking position if no further forces act on the locking element, e.g. forces being caused by the actuation element. The locking position may therefore be the default position the locking element. The retracting element may further automatically drive the locking element into the locking position when the sled does not move the actuation element into the second position or, if applicable, into the third position anymore. Thus, the sled is not required to be configured to move the actuation element from the second position or, if applicable, the third position to the first position. The retraction element may therefore also cause the movement of the actuation element into the first position.

The retracting element may for example be a spring.

The spring force of the spring may be smaller than the forces caused by the sled on the locking element when the sled moves the actuation element from the first positon to the second position or, if applicable, the third position.

The device may for example further comprise a drive element for driving the sled along the rail, wherein the drive element comprises a Bowden cable extending along the rail and being attached to the sled.
the Bowden cable may be attached to the sled. Furthermore, the Bowden cable may be arranged along the rail.

In an example, the drive element may comprise an electric motor for driving the Bowden cable.

In a further aspect, a vehicle is provided, the vehicle comprising a trunk, a roller blind cassette and a device according to the preceding description, wherein the sled is connected to a roller blind bar that is connectable to a roller blind of the roller blind cassette, wherein the device is arranged on at least one side trim of the trunk.

The effects and further embodiments of the vehicle according to the present invention are analogous to the effects and embodiments of the device according to the description mentioned above. Thus, it is referred to the above description of the device.

In an example, the side trim may comprise at least one receiving geometry for the roller blind cassette, wherein the receiving geometry comprises at least one opening, wherein the locking element is movable through the opening.

When moving through the opening, the locking element may engage a roller blind cassette being arranged on the receiving geometry to lock the cassette to the trunk.

The roller blind cassette may for example comprise a locking geometry for receiving at least a portion of the locking element.

The locking geometry may for example, be a recess on an end cap of the roller blind cassette. The locking element may engage the recess such that the roller blind cassette is locked in a form fit manner to the trunk.

The vehicle may for example further comprise a control unit, the control unit being configured to control the sled such that the sled may move from the first position to the second position.

The control unit may also be configured to control the sled such that the sled moves along the rail to pull out the roller blind from the roller blind cassette.

Further features, details and advantages of the invention result from the wording of the claims as well as from the following description of exemplary embodiments based on the drawings. The figures show:
- Fig. 1: a schematic drawing of a trunk of a vehicle,
- Fig. 2a, b: a schematic drawing of a device for locking a roller blind cassette on a trunk of a vehicle with different positions of the sled,
- Fig. 3a, b: a schematic drawing of a more detailed view of the device, and
- Fig. 4a-d: a schematic drawing of the device in a cross sectional view in the trunk of the vehicle.

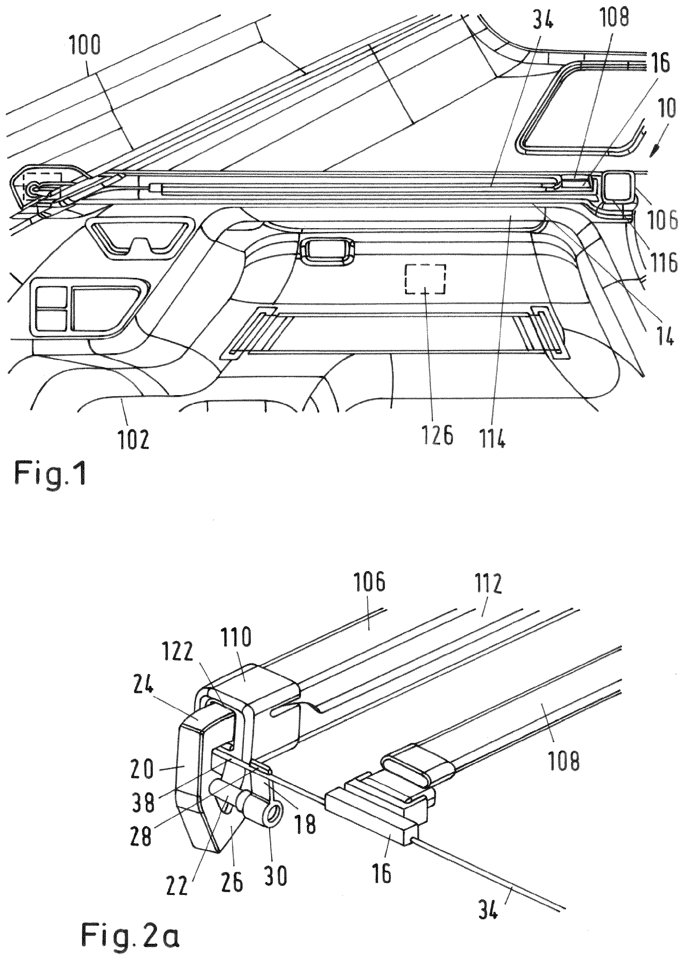

Fig. 1 shows a portion of a cabin of a vehicle 100. The vehicle 100 comprises a trunk 102 with a side trim 114.

A roller blind cassette 106 is arranged on a receiving geometry 116 of the side trim 114. The roller blind cassette 106 comprises a roller blind that is rolled up in the roller blind cassette 106.

Furthermore, the vehicle 100 comprises a device 10 for locking a roller blind cassette on a trunk of a vehicle. The device 10 comprises a rail 14 and a sled 16 that is connected to the rail 14 in a manner that the sled 16 may slide along the rail 14.

At least a section of the rail 14 may extend along a horizontal direction at the side trim 114 of the trunk 102. The device 10 may comprise two rails 14, one rail 14 on each side trim 114 of the trunk 102.

Furthermore, the device 10 may comprise a drive element 36 that drives the sled 16. A Bowden cable 34 may connect the drive element 36 with the sled 16. The Bowden cable 34 may extend along the rail 14.

A control unit 124 may control the drive element 36. The control unit 124 may be connected to the drive element 36 via a wired signal connection or via a wireless signal connection. The control unit 124 may provide signal data to control the movement direction of the sled 16 and the start and the stop of the movement of the sled 16.

The sled 16 may be connected to a roller blind bar 108. The roller blind bar 108 may extend across the trunk 102 in a direction being transverse to the driving direction of the vehicle 100.

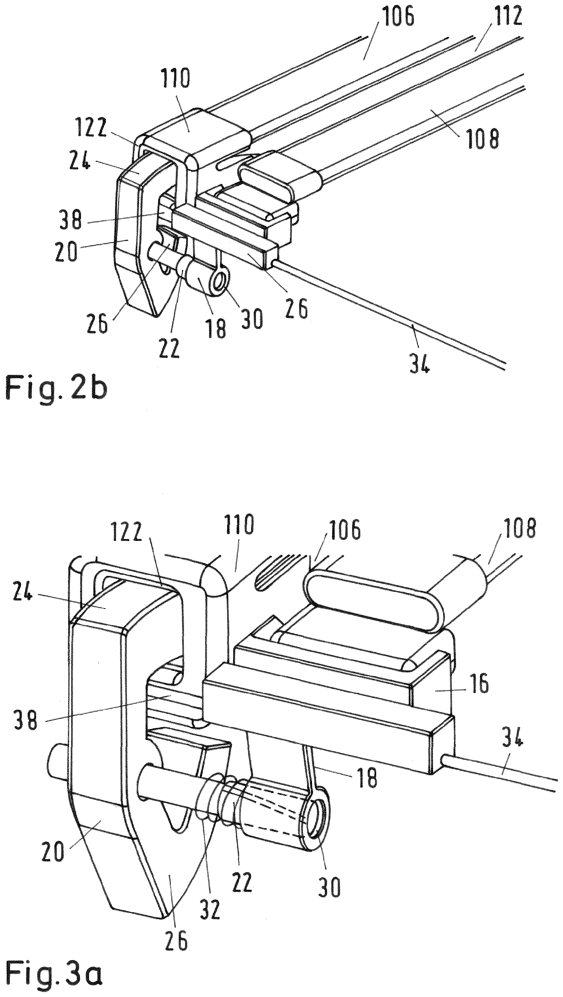

Figures 2a and 2b show the device 10 in further detail. The device 10 further comprises a locking element 20, an actuation element 18 for actuating the locking element 20.

The locking element 20 has a locking position and an unlocking position. For locking the roller blind cassette 106 to the trunk 102, the locking element 20 may have a locking hook element 24 for engaging an end cap 110 of the roller blind cassette 106. When the locking hook element 24 engages the end cap 110, the roller blind cassette 106 is locked.

Furthermore, the locking element 20 may have a C-shape. Then, the locking element 20 may be a lever with two arms. One of those arms may be the locking hook element 24.

Figs. 2a and 2b show the locking element 20 in the locking position. The locking element 20 engages the roller blind cassette 106 and locks the roller blind cassette 106 to the trunk 102.

The actuation element 18 is arranged at a portion 38 of the rail 14. The portion 38 may be an end portion of the rail 14. Furthermore, the actuation element 18 comprises a contact section 28 on the portion 38. The contact section 28 may protrude into that portion 38 such that the contact portion 28 is arranged in a moving path of the sled 14. If the sled 14 moves along the portion 28, the sled 16 will contact the contact section 28 of the actuation element 18. The sled 16 then acts on the actuation element 16 such that the actuation element 16 may move parallel to the rail 14.

Figs. 2a and 2b show the actuation element 18 in a first position. When the actuation element 18 is in the first position, the locking element 20 is in the locking position.

A screw drive 22 connects the actuation element 18 and the locking element 20. The screw drive 22 may comprise a threaded shaft that extends between the actuation element 18 and the locking element 20 in parallel to the rail 14. The threaded shaft is attached to a pivot axis of the locking element 20. A rotation of the threaded shaft around its longitudinal axis causes the locking element 20 to rotate around the pivot axis between the locking position and the unlocking position.

The actuation element 18 may have a threaded opening 30. The threaded shaft of the screw drive 22 may engage the threaded opening 30. A movement of the actuation element 18 in parallel to the rail 14 causes a rotation of the threaded shaft 22. This causes a movement of the locking element 18 around the pivot axis.

Thus, when the sled 16 moves along the portion 38 of the rail 14 towards the contact section 28 of the actuation element 18, the sled 14 causes a rotation of the locking element 20 via the actuation element 18.

A roller blind section 112 may be permanently arranged outside of the roller blind cassette 106 so that the roller blind of the roller blind cassette 106 may be pulled out. The roller blind bar 108 may be connected to the roller blind section 112. Thus, the sled 16 can guide the roller blind section 112 along the rail 14 to pull out the roller blind from the roller blind cassette 108. Pulling out the roller blind will cover the trunk 102.

According to Fig. 2a, the sled 16 is connected to the roller blind bar 108. Furthermore, the sled 16 is spaced apart from the portion 38 of the rail 14, i.e. from the contact section 28. The roller blind section 112 is detached from the sled 16. The roller blind is stored in the roller blind cassette 106.

According to Fig. 2b, the sled 16 approached the portion 38 of the rail 14. The sled 16 is not arranged in the portion 38, such that the sled 16 does not contact the contact section 28. The roller blind section 112 may be attached to the roller blind bar 108 in that position.

Fig. 3a shows a more detailed view of the device 10 according to the situation in Fig. 2b. The locking element 20 is in the locking position and locks the roller blind cassette 106 to the vehicle 100.

The actuation element 18 is connected to a retraction element 32 that causes a force that drives the actuation element 18 into the first position. The retraction element 32 may be a spring that pushes the actuation element 18 away from the locking element 20. Then, the actuation element 18 is spring loaded. Thus, if the sled 16 moves in a direction away from the locking element 20, the retraction element 32 forces the actuation element 18 towards the first position. Consequently, the retraction element 32 forces the locking element 20 into the locking position.

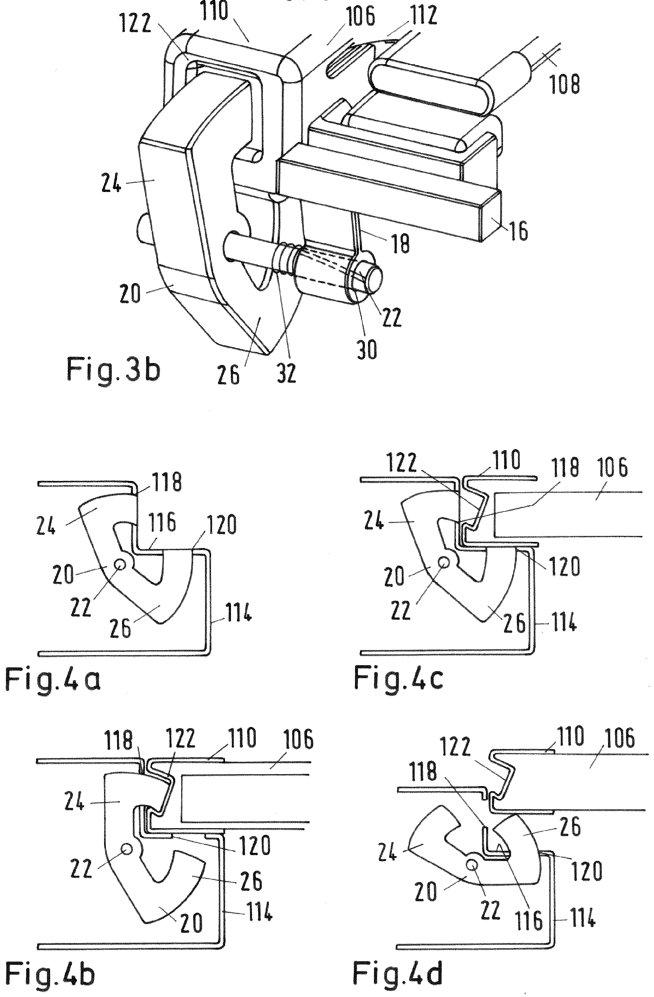

Fig. 3b shows the locking element 20 in the unlocking position. In comparison to Fig. 3a, the sled 16 entered the portion 38 of the rail 14 such that the sled 16 contacted the contact section 28 and moved the actuation element 18 towards the locking element 20. The sled 16 moved the actuation element 18 from the first position to a second position. The movement of the actuation element 18 between the first position and the second position causes the locking element 20 to rotate from the locking position to the unlocked position being shown in Fig. 3b.

Figs. 4a to 4d show a cross sectional view across a portion of the side trim 114.

The side trim 114 may comprise an opening 118, wherein the locking hook element 24 of the locking element 20 is arranged on that opening 118. The end face of the locking hook element 24 is flush with the portion of the side trim 114 surrounding the opening 118 if the locking element 20 is in the unlocking position as shown in Fig. 4a. The actuation element 18 then is in the second position.

The side trim 114 may further comprise a second opening 120. The locking element 20 may then have a presenting hook element 26 for pushing up the roller blind cassette 106 from the receiving geometry 116. The presenting hook element 26 may be arranged on the second opening 120. The end face of the presenting hook element 26 is flush with the portion of the side trim 114 surrounding the opening 120 if the locking element 20 is in the unlocking position as shown in Fig. 4a.

The presenting hook element 26 may be another arm of the locking element 20 having a C-shape.

Furthermore, according to Fig. 4a, the receiving geometry 116 is empty and the locking element 20 is in the unlocking position.

In this position, the roller blind cassette 106 can be mounted on the trunk 102. To mount the roller blind cassette 106, the end caps 110 each having a locking geometry 122 are arranged in the receiving geometry 116 of the side trim 114.

After mounting the roller blind cassette 106, the roller blind section 112 can be attached to the roller blind bar 108. The sled 16 can then pull out the roller blind from the roller blind cassette 106. While pulling out the roller blind, the sled 16 will leave the portion 38 of the rail 14. This causes the actuation element 18 to move into the first position. Consequently, the locking element 20 moves into the locking position as shown in Fig. 4b.

When moving from the unlocking position to the locking position, the locking hook element 24 can be moved through the opening 118 such that the locking hook element 24 protrudes into the receiving geometry 116. If an end cap 110 of the roller blind cassette 106 is arranged in the receiving geometry 116, the locking hook element 24 engages the locking geometry 122 such that the roller blind cassette 106 is locked in a form fit manner.

In the locking position of the locking element 20, the presenting hook element 26 is sunk into the side trim 114. the presenting hook element 26 is then spaced apart from the second opening 120.

For unlocking the roller blind cassette 106, the sled 16 is moved into the portion 38 of the rail 14. When contacting the contact section 28 of the actuation element 18, the sled 16 removes the actuation element 18 from the first position. The sled 16 moves the actuation element 18 into the second position. This causes the locking element 20 to move from the locking position to the unlocking position as shown in Fig. 4c. Then, the roller blind cassette 106 is unlocked.

If the sled 16 moves further, the sled 16 will move the actuation element 18 from the second position to a third position. This causes the locking element 20 to rotate further. The locking element 20 then rotates from the unlocking position to the presenting position shown in Fig. 4d.

While the locking element 20 moves into the presenting position, the presenting hook element 26 can be moved through the second opening 120 such that the presenting hook element 26 protrudes into the receiving geometry 116. Then, the locking element 20 is in the presenting position and lifts the roller blind cassette 106 up. A user can then conveniently remove the roller blind cassette 106 from the receiving geometry 116.

In the presenting position of the locking element 20, the locking hook element 24 is spaced apart from the opening 118. Then, the locking hook element 24 is sunk into the side trim 114.

The invention is not limited to one of the aforementioned embodiments. It can be modified in many ways.

All features and advantages resulting from the claims, the description and the drawing, including constructive details, spatial arrangements and procedural steps, may be essential for the invention both in themselves and in various combinations.

### List of references

- 10: device for locking a roller blind cassette
- 14: rail
- 16: sled
- 18: actuation element
- 20: locking element
- 22: screw drive
- 24: locking hook element
- 26: presenting hook element
- 28: contact section
- 30: threaded opening
- 32: retraction element
- 34: Bowden cable
- 36: drive element
- 38: portion of the rail

- 100: vehicle
- 102: trunk
- 106: roller blind cassette
- 108: roller blind bar
- 110: end cap
- 112: roller blind section
- 114: side trim
- 116: receiving geometry
- 118: opening
- 120: second opening
- 122: locking geometry
- 124: control unit

## Claims

1. Device for locking a roller blind cassette (106) on a trunk (102) of a vehicle (100), the device (10) comprising:
- a rail (14) extending at least partially along the trunk (102),
- a sled (16) being attached to the rail (14) in a sliding manner and being configured to guide a roller blind section (112) from the roller blind cassette (106) along the rail (14),
- a locking element (20) for locking the roller blind cassette (106) on the trunk (102), the locking element (20) being movable between a locking position and an unlocking position,
- an actuation element (18) for actuating the locking element (20),
wherein the actuation element (18) comprises a contact section (28) being arranged in a portion (38) of the rail (14),
**characterized in that**,
the actuation element (18) is movable by the sled (16) between a first position and a second position, when the sled (16) moves along the portion (38) of the rail (14) and contacts the contact section (28),
wherein the actuation element (18) is configured to move the locking element (20) from the locking position to the unlocking position, when moving from the first position to the second position.

2. Device according to claim 1, **characterized in that** the locking element (20) is movable in a rotating manner.

3. Device according to claim 1 or 2, **characterized in that** the locking element (20) comprises a screw drive (22), wherein the actuation element (18) comprises a threaded opening (30) which is engaged to the screw drive (22) such that a movement of the actuation element (18) between the first position and the second position turns the screw drive (22) that rotates the locking element (20) between the locking position and the unlocking position.

4. Device according to claim 3, **characterized in that** at least a portion of the screw drive (22) extends parallel to the rail (14).

5. Device according to one of claims 1 to 4, **characterized in that** the locking element (20) comprises a locking hook element (24) for engaging and locking a roller blind cassette (106), when the locking element (20) is in the locking position.

6. Device according to one of claims 1 to 5, **characterized in that** the actuation element (18) is further movable by the sled (16) into a third position being different from the first and second position, wherein the actuation element (18) is configured to move the locking element (20) into a presenting position, when moving into the third position.

7. Device according to claim 6, **characterized in that** the locking element (20) comprises a presenting hook element (26) for pushing up a roller blind cassette (106), when the locking element (20) is moved into the presenting position.

8. Device according to one of claims 1 to 7, **characterized in that** the device (10) further comprises a retracting element (32) being configured to drive the locking element (20) into the locking position unless the actuation element (18) moves the locking element (20).

9. Device according to claim 8, **characterized in that** the retracting element (32) is a spring.

10. Device according to one of claims 1 to 9, **characterized in that** the device (10) further comprises a drive element (36) for driving the sled (16) along the rail (14), wherein the drive element (36) comprises a Bowden cable (34) extending along the rail (14) and being attached to the sled (16).

11. Device according to claim 10, **characterized in that** the drive element (36) comprises an electric motor for driving the Bowden cable (34).

12. Vehicle comprising a trunk (102), a roller blind cassette (106) and a device (10) according to one of the preceding claims, wherein the sled (16) is connected to a roller blind bar (108) that is connectable to a roller blind of the roller blind cassette (106), wherein the device (10) is arranged on at least one side trim (114) of the trunk (102).

13. Vehicle according to claim 12, **characterized in that** the side trim (114) comprises at least one receiving geometry (116) for the roller blind cassette (106), wherein the side trim (114) comprises at least one opening (118), wherein the locking element (20) is movable through the opening (118).

14. Vehicle according to claim 12 or 13, **characterized in that** the roller blind cassette (106) comprises a locking geometry (122) for receiving at least a portion of the locking element (20).

15. Vehicle according to one of claims 12 to 14, **characterized in that** the vehicle (100) further comprises a control unit (124), the control unit (124) being configured to control the sled (16) such that the sled (16) may move from the first position to the second position.

## Patentansprüche

1. Vorrichtung zum Verriegeln einer Rollokassette (106) an einem Kofferraum (102) eines Fahrzeugs (100), wobei die Vorrichtung (10) umfasst:
- eine Schiene (14), die sich zumindest teilweise entlang des Kofferraums (102) erstreckt,
- einen Schlitten (16), der gleitend an der Schiene (14) angebracht ist und dazu konfiguriert ist, ein Rolloteilstück (112) von der Rollokassette (106) entlang der Schiene (14) zu führen,
- ein Verriegelungselement (20) zum Verriegeln der Rollokassette (106) am Kofferraum (102), wobei das Verriegelungselement (20) zwischen einer Verriegelungsposition und einer Entriegelungsposition beweglich ist,
- ein Betätigungselement (18) zum Betätigen des Verriegelungselements (20),
wobei das Betätigungselement (18) ein Kontaktteilstück (28) umfasst, das in einem Abschnitt (38) der Schiene (14) angeordnet ist,
**dadurch gekennzeichnet, dass**
das Betätigungselement (18) durch den Schlitten (16) zwischen einer ersten Position und einer zweiten Position beweglich ist, wenn sich der Schlitten (16) entlang des Abschnitts (38) der Schiene (14) bewegt und das Kontaktteilstück (28) berührt,
wobei das Betätigungselement (18) konfiguriert ist, um das Verriegelungselement (20) von der Verriegelungsposition in die Entriegelungsposition zu bewegen, wenn es sich von der ersten Position in die zweite Position bewegt.

2. Vorrichtung nach Anspruch 1, **dadurch gekennzeichnet, dass** das Verriegelungselement (20) rotierend beweglich ist.

3. Vorrichtung nach Anspruch 1 oder 2, **dadurch gekennzeichnet, dass** das Verriegelungselement (20) einen Gewindetrieb (22) umfasst, wobei das Betätigungselement (18) eine Gewindeöffnung (30) umfasst, die mit dem Gewindetrieb (22) derart in Eingriff steht, dass eine Bewegung des Betätigungselements (18) zwischen der ersten Position und der zweiten Position den Gewindetrieb (22) dreht, der das Verriegelungselement (20) zwischen der Verriegelungsposition und der Entriegelungsposition dreht.

4. Vorrichtung nach Anspruch 3, **dadurch gekennzeichnet, dass** sich zumindest ein Abschnitt des Gewindetriebs (22) parallel zur Schiene (14) erstreckt.

5. Vorrichtung nach einem der Ansprüche 1 bis 4, **dadurch gekennzeichnet, dass** das Verriegelungselement (20) ein Verriegelungshakenelement (24) zum Eingreifen und Verriegeln einer Rollokassette (106) aufweist, wenn sich das Verriegelungselement (20) in der Verriegelungsposition befindet.

6. Vorrichtung nach einem der Ansprüche 1 bis 5, **dadurch gekennzeichnet, dass** das Betätigungselement (18) ferner durch den Schlitten (16) in eine dritte Position bewegbar ist, die sich von der ersten und zweiten Position unterscheidet, wobei das Betätigungselement (18) dazu konfiguriert ist, das Verriegelungselement (20) beim Bewegen in die dritte Position in eine Vorlegeposition zu bewegen.

7. Vorrichtung nach Anspruch 6, **dadurch gekennzeichnet, dass** das Verriegelungselement (20) ein Vorlegehakenelement (26) zum Hochschieben einer Rollokassette (106) umfasst, wenn das Verriegelungselement (20) in die Vorlegeposition bewegt wird.

8. Vorrichtung nach einem der Ansprüche 1 bis 7, **dadurch gekennzeichnet, dass** die Vorrichtung (10) ferner ein Rückzugselement (32) umfasst, das dazu konfiguriert ist, das Verriegelungselement (20) in die Verriegelungsposition zu treiben, es sei denn, das Betätigungselement (18) bewegt das Verriegelungselement (20).

9. Vorrichtung nach Anspruch 8, **dadurch gekennzeichnet, dass** das Rückzugselement (32) eine Feder ist.

10. Vorrichtung nach einem der Ansprüche 1 bis 9, **dadurch gekennzeichnet, dass** die Vorrichtung (10) ferner ein Antriebselement (36) zum Antreiben des Schlittens (16) entlang der Schiene (14) umfasst, wobei das Antriebselement (36) einen Bowdenzug (34) umfasst, der sich entlang der Schiene (14) erstreckt und an dem Schlitten (16) angebracht ist.

11. Vorrichtung nach Anspruch 10, **dadurch gekennzeichnet, dass** das Antriebselement (36) einen Elektromotor zum Antreiben des Bowdenzugs (34) umfasst.

12. Fahrzeug mit einem Kofferraum (102), einer Rollokassette (106) und einer Vorrichtung (10) nach einem der vorhergehenden Ansprüche, wobei der Schlitten (16) mit einer Rollostange (108) verbunden ist, die mit einem Rollo der Rollokassette (106) verbindbar ist, wobei die Vorrichtung (10) an mindestens einer Seitenverkleidung (114) des Kofferraums (102) angeordnet ist.

13. Fahrzeug nach Anspruch 12, **dadurch gekennzeichnet, dass** die Seitenverkleidung (114) zumindest eine Aufnahmegeometrie (116) für die Rollokassette (106) umfasst, wobei die Seitenverkleidung (114) zumindest eine Öffnung (118) umfasst, wobei das Verriegelungselement (20) durch die Öffnung (118) bewegbar ist.

14. Fahrzeug nach Anspruch 12 oder 13, **dadurch gekennzeichnet, dass** die Rollokassette (106) eine Verriegelungsgeometrie (122) zur Aufnahme zumindest eines Abschnitts des Verriegelungselements (20) umfasst.

15. Fahrzeug nach einem der Ansprüche 12 bis 14, **dadurch gekennzeichnet, dass** das Fahrzeug (100) ferner eine Steuereinheit (124) umfasst, wobei die Steuereinheit (124) dazu konfiguriert ist, den Schlitten (16) so zu steuern, dass sich der Schlitten (16) von der ersten Position in die zweite Position bewegen kann.

## Revendications

1. Dispositif de verrouillage d'une cassette de store roulant (106) sur un coffre (102) d'un véhicule (100), le dispositif (10) comprenant :
- un rail (14) s'étendant au moins partiellement le long du coffre (102),
- un traîneau (16) fixé au rail (14) de manière coulissante et configuré pour guider une section de store roulant (112) à partir de la cassette de store roulant (106) le long du rail (14),
- un élément de verrouillage (20) pour verrouiller la cassette de store roulant (106) sur le coffre (102), l'élément de verrouillage (20) étant mobile entre une position de verrouillage et une position de déverrouillage,
- un élément d'actionnement (18) pour actionner l'élément de verrouillage (20),
dans lequel l'élément d'actionnement (18) comprend une section de contact (28) qui est disposée dans une partie (38) du rail (14),
**caractérisé en ce que**,
l'élément d'actionnement (18) peut être déplacé par le traîneau (16) entre une première position et une deuxième position, lorsque le traîneau (16) se déplace le long de la partie (38) du rail (14) et entre en contact avec la section de contact (28),
dans lequel l'élément d'actionnement (18) est configuré pour déplacer l'élément de verrouillage (20) de la position de verrouillage à la position de déverrouillage, lorsqu'il se déplace de la première position à la deuxième position.

2. Dispositif selon la revendication 1, **caractérisé en ce que** l'élément de verrouillage (20) est mobile en rotation.

3. Dispositif selon la revendication 1 ou 2, **caractérisé en ce que** l'élément de verrouillage (20) comprend un entraînement à vis (22), dans lequel l'élément d'actionnement (18) comprend une ouverture filetée (30) qui est engagée sur l'entraînement à vis (22) de sorte qu'un mouvement de l'élément d'actionnement (18) entre la première position et la deuxième position fait tourner l'entraînement à vis (22) qui fait tourner l'élément de verrouillage (20) entre la position de verrouillage et la position de déverrouillage.

4. Dispositif selon la revendication 3, **caractérisé en ce qu'**au moins une partie de l'entraînement à vis (22) s'étend parallèlement au rail (14).

5. Dispositif selon l'une des revendications 1 à 4, **caractérisé en ce que** l'élément de verrouillage (20) comprend un élément de crochet de verrouillage (24) pour engager et verrouiller une cassette de store roulant (106), lorsque l'élément de verrouillage (20) est en position de verrouillage.

6. Dispositif selon l'une des revendications 1 à 5, **caractérisé en ce que** l'élément d'actionnement (18) peut être en outre déplacé par le traîneau (16) dans une troisième position différente de la première et de la deuxième position, dans lequel l'élément d'actionnement (18) est configuré pour déplacer l'élément de verrouillage (20) dans une position de présentation, lorsqu'il se déplace dans la troisième position.

7. Dispositif selon la revendication 6, **caractérisé en ce que** l'élément de verrouillage (20) comprend un élément de crochet de présentation (26) pour pousser vers le haut une cassette de store roulant (106), lorsque l'élément de verrouillage (20) est placé dans la position de présentation.

8. Dispositif selon l'une des revendications 1 à 7, **caractérisé en ce que** le dispositif (10) comprend en outre un élément de rétraction (32) qui est configuré pour entraîner l'élément de verrouillage (20) dans la position de verrouillage à moins que l'élément d'actionnement (18) ne déplace l'élément de verrouillage (20).

9. Dispositif selon la revendication 8, **caractérisé en ce que** l'élément de rétraction (32) est un ressort.

10. Dispositif selon l'une des revendications 1 à 9, **caractérisé en ce que** le dispositif (10) comprend en outre un élément d'entraînement (36) pour entraîner le traîneau (16) le long du rail (14), dans lequel l'élément d'entraînement (36) comprend un câble Bowden (34) s'étendant le long du rail (14) et fixé au traîneau (16).

11. Dispositif selon la revendication 10, **caractérisé en ce que** l'élément d'entraînement (36) comprend un moteur électrique pour entraîner le câble Bowden (34).

12. Véhicule comprenant un coffre (102), une cassette de store roulant (106) et un dispositif (10) selon l'une des revendications précédentes, dans lequel le traîneau (16) est relié à une barre de store roulant (108) pouvant être reliée à un store roulant de la cassette de store roulant (106), dans lequel le dispositif (10) est disposé sur au moins une garniture latérale (114) du coffre (102).

13. Véhicule selon la revendication 12, **caractérisé en ce que** la garniture latérale (114) comprend au moins une géométrie de réception (116) pour la cassette de store roulant (106), dans lequel la garniture latérale (114) comprend au moins une ouverture (118), dans lequel l'élément de verrouillage (20) peut être déplacé à travers l'ouverture (118).

14. Véhicule selon la revendication 12 ou 13, **caractérisé en ce que** la cassette de store roulant (106) comprend une géométrie de verrouillage (122) pour recevoir au moins une partie de l'élément de verrouillage (20).

15. Véhicule selon l'une des revendications 12 à 14, **caractérisé en ce que** le véhicule (100) comprend en outre une unité de commande (124), l'unité de commande (124) étant configurée pour commander le traîneau (16) de sorte que le traîneau (16) peut se déplacer de la première position à la deuxième position.
